# EUROPEAN PATENT SPECIFICATION

(11) **EP 2 208 183 B1**
(45) Date of publication and mention of the grant of the patent: **02.05.2018**
(21) Application number: 08850433.7
(22) Date of filing: 06.11.2008
(51) Int. Cl.: G06T 7/00, G06T 7/11

(54) **COMPUTER-AIDED DETECTION (CAD) OF A DISEASE**
COMPUTERGESTÜTZTE KRANKHEITSERKENNUNG
DETECTION D'UNE MALADIE ASSISTEE PAR ORDINATEUR

(30) Priority: 14.11.2007 EP 07120708
(43) Date of publication of application: 21.07.2010
(73) Proprietor: Koninklijke Philips N.V., 5656 AE Eindhoven (NL); Philips Intellectual Property & Standards GmbH, 20099 Hamburg (DE)
(72) Inventor: LORENZ, Cristian, NL-5656 AE Eindhoven (NL); VON BERG, Jens, NL-5656 AE Eindhoven (NL); BUELOW, Thomas, NL-5656 AE Eindhoven (NL); WIEMKER, Rafael, NL-5656 AE Eindhoven (NL)
(74) Representative: van Velzen, Maaike Mathilde
(86) International application number: PCT/IB2008/054632
(87) International publication number: WO 2009/063363

(56) References cited:
- WO-A1-2006/054267
- US-A1- 2003 165 262
- US-A1- 2005 207 630
- NIGRO ET AL: "Prevalence and location of nodal metastases in distal esophageal adenocarcinoma confined to the wall: Implications for therapy" JOURNAL OF THORACIC AND CARDIOVASCULAR SURGERY, MOSBY-YEAR BOOK, INC., ST. LOUIS, MO, US, vol. 117, no. 1, 1 January 1999 (1999-01-01), pages 16-25, XP005693646 ISSN: 0022-5223 cited in the application
- XU C ET AL: "Medical Image Segmentation Using Deformable Models" 1 May 2000 (2000-05-01), HANDBOOK OF MEDICAL IMAGING, VOLUME 2. MEDICAL IMAGE PROCESSING AND ANALYSIS, SPIE, BELLINGHAM, WA, US, PAGE(S) 129 - 174 , XP002496073 cited in the application the whole document
- KALLERGI MARIA: "Computer-aided diagnosis of mammographic microcalcification clusters" MEDICAL PHYSICS, AIP, MELVILLE, NY, US, vol. 31, no. 2, 1 February 2004 (2004-02-01), pages 314-326, XP012074776 ISSN: 0094-2405
- CHAN HEANG-PING ET AL: "Computerized analysis of mammographic microcalcifications in morphological and texture feature spaces" MEDICAL PHYSICS, AIP, MELVILLE, NY, US, vol. 25, no. 10, 1 October 1998 (1998-10-01), pages 2007-2019, XP012010335 ISSN: 0094-2405
- Adam B. Milstein ET AL: "Statistical approach for detection and localization of a fluorescing mouse tumor in Intralipid", Applied Optics, 20 April 2005 (2005-04-20), pages 2300-2310, XP55313199, United States DOI: 10.1364/AO.44.002300 Retrieved from the Internet: URL:https://engineering.purdue.edu/~bouman /publications/orig-pdf/ao2.pdf [retrieved on 2016-11-03]

## Description

### FIELD OF THE INVENTION

The present invention relates to a method for analyzing a medical image data set obtained from a medical imaging modality, such as computer tomography (CT), magnetic resonance imaging (MRI), positron electron tomography (PET), single photon emission computed tomography (SPECT), ultrasound scanning, and rotational angiography, and other medical imaging modalities, the method comprising the steps of: segmenting the medical image data set using an anatomical model, analyzing the segmented data for characteristics of a disease resulting in a set of analysis data, and evaluating the set of analysis data with respect to the disease. The invention also relates to a corresponding computer system and a corresponding computer program product.

### BACKGROUND OF THE INVENTION

In recent years advances within medical imaging, including modalities like computer tomography (CT) or magnetic resonance imaging (MRI) etc., have provided for improved detection of various types of diseases, in particular cancer tumours. This progress within medical imaging has resulted in a vast amount of medical image data that has to be carefully analysed and evaluated in order to obtain sound diagnostic results there from. This analysis phase of medical images can be quite time consuming even for trained personnel e.g. radiologists. Experts trained in analysis of medical imaging are also a precious resource making medical imaging analysis a possible bottleneck of the diagnostic process.

Accordingly, there is an increasing need for computer-aided detection (CAD) helping the radiologist to find and identify possible diseases in the medical image data available. It should be emphasised that the CAD systems are not, at least currently, intended to replace the radiologist but merely to support or guide him during the image analysis. Also the benefit of using CAD is also questioned for some diseases, thus great care should be taking in implementing a CAD system for a disease. In particular, the receiver operating characteristics (ROC) should be well understood, and preferably controlled, before application of a CAD system.

US 2005/0200763 discloses such a computer assisted method of detecting and classifying lung nodules within a set of CT images. Initially, lung and esophagus segmentation is performed to identify the regions of the CT images in which to search for potential lung nodules. The lungs are processed to identify the left and right sides of the lungs and each side of the lung is divided into subregions including upper, middle and lower subregions and central, intermediate and peripheral subregions. The computer analyzes each of the lung regions to detect and identify a three-dimensional vessel tree representing the blood vessels at or near the mediastinum. The computer then detects objects that are attached to the lung wall or to the vessel tree to assure that these objects are not eliminated from consideration as potential nodules. Thereafter, the computer performs a pixel similarity analysis on the appropriate regions within the CT images to detect potential nodules and performs one or more expert analysis techniques using the features of the potential nodules to determine whether each of the potential nodules is or is not a lung nodule. Thereafter, the computer uses further features, such as speculation features, growth features, etc. in one or more expert analysis techniques to classify each detected nodule as being either benign or malignant, possibly the nodule is assigned with a certain probability of benign or malignant. The computer then displays the detection and classification results to the radiologist to assist the radiologist in interpreting the CT exam for the patient.

However, in order to perform this method a relatively large computational power has to be provided, which may limit the spreading of the disclosed CAD method. Because the computing power is limited, there is a need for a way of simplifying the necessary calculation in order to have a practically working CAD system.

Another disadvantage of the method disclosed in US 2005/0200763 is the fixed point of operation on the receiver operation characteristics (ROC) known from detection theory. A compromise between sensitivity and specificity also has to be made but this may lead to undesirable high number of false positives (FP) or, even worse, false negatives.

Hence, an improved a method for analyzing a medical image data set would be advantageous, and in particular a more efficient and/or reliable method would be advantageous.

It should be noted that US 2003/0165262 discloses a method of detecting a calcification in a bounding box enclosing a portion of a medical image, including the steps of obtaining the medical image in digital form, filtering at least image data in the bounding box using a difference of Gaussians (DOG) filter, and thresholding the fitered image data to detect, as one or more calcifications, portions of the filtered image data which exceed a threshold. The detected calcification may be classified by segmenting the one or more detected calcifications, extracting at least one feature from the one or more segmented calcifications, and determining a likelihood of malignancy of the one or more detected calcifications.

Furthermore, it should be noted that paper "computer-aided diagnosis of mammographic microcalcification clusters", by Kallergi Maria in Medical Physicis, AIP, Melville, NY, US, vol. 31, no. 2, 1 February 2004, pages 314-326 XP012074776, ISSN: 0094-2405, discloses computer-aided diagnosis techniques in medical imaging for automated differentiation between benign and malignant lesions and providing cancer likelihood for a detected lesion given image and/or patient characteristics. The goal of the study described in the paper, was the development and evaluation of a computer-aided detection and diagnosis algorithm for mammographic calcification clusters. The algorithm included automated detection, segmentation and classification steps based on wavelet filters and artificial neural networks. Classification features were selected primarily from descriptors of the morphology of the individual calcifications and the distribution of the cluster.

Milstein et al.: "Statistical approach for detection and localization of a fluorescing mouse tumor in Intralipid", Applied optics, 20 April 2005, pages 2300-2310 relates to a method for detecting and localizing a fluorescing tumour. It describes computing the probability of tumor detection and the Cramér-Rao lower bound for the localization estimate error, which are performance metrics that could potentially be optimized in an experimental design.

### SUMMARY OF THE INVENTION

Accordingly, the invention preferably seeks to mitigate, alleviate or eliminate one or more of the above mentioned disadvantages singly or in any combination. In particular, it may be seen as an object of the present invention to provide a method for easier and/or faster analysis of a medical image data set for likelihood for a disease.

Thus, the above described object and several other objects are intended to be obtained in a first aspect of the invention by providing a method for analyzing a medical image data set, the method comprising the steps of:
a) segmenting the medical image data set using an anatomical model,
b) analyzing the segmented data for characteristics of a disease resulting in a set of analysis data, and
c) evaluating the set of analysis data with respect to the disease,
wherein at least one of the above steps a), b) and c) comprises as an input a value of position dependent probability (P_r) for the disease.

The invention is particularly, but not exclusively, advantageous for obtaining an improved computer-aided detection (CAD) method facilitating that more efficient computations can be performed because the degree of analysis in a certain region of the part of the patient, e.g. the lung, can be adjusted or tailored to the level of probability of the disease in the region. Thus by application of the present invention it is possible to increase computational speed and thereby diseases like cancer, in particular cancer nodules in the lungs, can be more effectively found from medical image analysis.

It should be noted that the present invention applies a positional or regional dependent probability as an input in certain part of the computer-aided detection of a possible diseased structured within the medical images. The position dependent probability is an a priori probability that may be obtained from medical journal, well-established medical statistics, authority approved software and other reliable sources. One example is J. J. Nigro et al., "PREVALENCE AND LOCATION OF NODAL METASTASES IN DISTAL ESOPHAGEAL DENOCARCINOMA CONFINED TO THE WALL: IMPLICATIONS FOR THERAPY", The Journal of Thoracic and Cardiovascular Surgery Volume 117, Number 1. The application of region dependent probabilities is not to be confused with the fact that some CAD methods from an evaluation step of the suspected object in medical images, e.g. nodules in the lung, have as a result or output a certain probability that the suspected object is malignant or benign. Thus for example the CAD method disclosed in US 2005/0200763 may use a classifier routine to assign likelihood with malignancy to a candidate nodule in the lung. However, this is a preliminary result or final result of the method and is not used as an input to simplify subsequent calculations during the CAD process.

In the context of the present invention, it is also to be understood that the term "disease" is to construe broadly, and comprising in particular the situation where an anomalous structure of examined tissue is not malignant i.e. the anomalous structure may be benign. One example may be the finding of a tumour that is benign, such a tumour also being a "disease" in the context of the present invention.

Optionally, the step a) of segmenting the medical image data set using an anatomical model may comprise as an input a position dependent probability (P_r) for the disease. Thus, segmentation resolution may be fine or coarse depending on the level of position dependent probability (P_r). In particular, one or more regions of the medical image data set may not be segmented due to the position dependent probability (P_d) for the disease in the one or more regions being below a predetermined threshold value thereby excluding regions with quite low probability in order to simplify further processing and computations.

Optionally, the step b) of analyzing the segmented data for characteristics of the disease resulting in a set of analysis data may comprise as an input a position dependent probability (P_r) for the disease. In particular, the position dependent probability (P_r) may be applied to change the operation point of the receiver operation characteristics (ROC) of the computer-aided detection (CAD) method or algorithm. The level of probability (P_r) may determine the direction of the change. Thus, in one embodiment the specificity of the performed analysis may be increased in dependency of the position dependent probability (P_r) for the disease for example if specificity should be increased in a relative high P_r region. Alternatively, the sensitivity of the performed analysis may be increased in dependency of the position dependent probability (P_r) for the disease. Thus, for relatively low P_r regions sensitivity may be increased.

Optionally, the step c) of evaluating the set of analysis data with respect to the disease may comprise as an input a position dependent probability (P_r) for the disease. Thus, statistical classification of e.g. nodules, using for instance Bayesian network can have as input P_r for that specific region.

In one embodiment, the disease may be a tumour and the corresponding position dependent probability (P_r) may then be the probability for having a tumour at that position (P_r_tum). In that case, the position dependent probability for having a tumour (P_r_tum) may be combined with a probability that the tumour is malignant (P_r_tum_M) and/or benign (P_r_tum_B). Thus, there is introduced two levels of probabilities with respect to tumours in lungs for example. Similarly, the multiple levels of probabilities may be introduced within the teaching of the present invention.

Preferably, the position dependent probability (P_r) for the disease may be obtained from a reference database of position dependent probabilities. The database can in turn be based on literature sources, standard works etc. The database may be remotely based. Possibly, the reference database of position dependent probabilities can be internal firmware.

In one embodiment, the position dependent probability (P_r) for the disease may be further dependent on characteristics of the patient being examined. Thus, P_r may be dependent on the patient features like age, sex, habits (especially smoking habits or other risk increasing behaviour), and other characteristics known to increase or decrease the probability of incurring a certain disease.

In another embodiment, the position dependent probability (P_r) for the disease may be combined with a probability (P_CAD) for finding the disease dependent on the CAD method being applied. Such knowledge about the CAD method may require extensive testing and/or experience with the CAD method in question. Once such knowledge is available it may however relatively easy be applied in the context of the present invention.

In yet another embodiment, where the position dependent probability (P_r) for the disease may be combined with a probability (P_IM) for finding the disease dependent on the imaging modality used to obtain the medical image data set. This may be e.g. the probability for beam starvation or metal artefacts in CT, or motion error bands in MRI etc.

In a preferred embodiment, one or more position dependent probabilities (P_r) for the disease may be displayed to a user, e.g. a radiologist, together with a medical image. An indication to a user of the value of P_r may be made on a screen, but it could also be a value combined therewith or derived there from.

In a second aspect, the present invention relates to a computer system arranged for analyzing a medical image data set, the system comprising:
- segmentation means for segmenting the medical image data set using an anatomical model,
- analysis means for analyzing the segmented data for characteristics of a disease resulting in a set of analysis data, and
- evaluation means for evaluating the set of analysis data with respect to the disease,
wherein at least one of the segmentation means, the analysis means and the evaluation means, is arranged to receive as an input a position dependent probability (P_r) for the disease.

In a third aspect, the invention relates to a computer program product being adapted to enable a computer system comprising at least one computer having data storage means in connection therewith.

This aspect of the invention is particularly, but not exclusively, advantageous in that the present invention may be accomplished by a computer program product enabling a computer system to carry out the operations of the invention when down- or uploaded into the computer system. Such a computer program product may be provided on any kind of computer readable medium, or through a network.

The individual aspects of the present invention may each be combined with any of the other aspects. These and other aspects of the invention will be apparent from the following description with reference to the described embodiments.

### BRIEF DESCRIPTION OF THE FIGURES

The various aspects of the invention will now be described in more detail with regard to the accompanying figures. The figures show one way of implementing the present invention and is not to be construed as being limiting to other possible embodiments falling within the scope of the attached claim set.
Figure 1 schematic drawing of a combined imaging modality and computer system for one embodiment of the present invention,
Figure 2 is a schematic flow chart of the method steps according to an embodiment of the present invention,
Figure 3 is a receiver operating characteristics (ROC) graph,
Figure 4 is a cross-sectional CT image of a patient illustrating a false positive (FP) nodule candidate,
Figure 5 is a cross-sectional CT image of a patient illustrating a true nodule (TP),
Figure 6 is a schematic flow chart of a method according to the invention.

### DETAILED DESCRIPTION OF AN EMBODIMENT

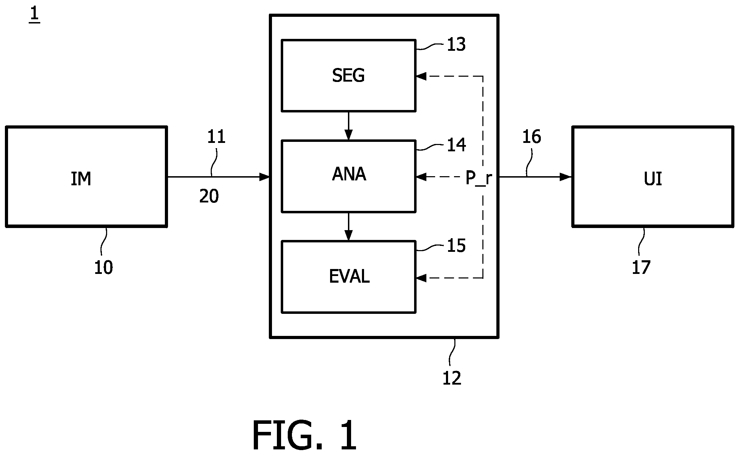

Figure 1 schematic drawing of a combined imaging modality and computer system 1 for one embodiment of the present invention. The computer system 1 being arranged for performing CAD from a medical image data set 20 obtained from a medical imaging modality IM, such as computer tomography (CT), magnetic resonance imaging (MRI), positron electron tomography (PET), single photon emission computed tomography (SPECT), ultrasound scanning, and rotational angiography, or any other medical imaging modalities. The transmission from the modality IM to the unit 12 can be via a dedicated connection means 11 (short range or long range, possibly via internet) or by wireless transmission.

The unit 12 of the computer system 1 is arranged for performing computer-aided detection (CAD) of a disease on a medical image data set 20. Segmentation means 13 are provided for segmenting the medical image data set 20 using an anatomical model, preferably an augmented model. For general reference to segmentation in medical imaging, the reader is referred to C. Xu, D. Pham, and J.L. Prince, "Medical Image Segmentation Using Deformable Models," Handbook of Medical Imaging, Volume 2: Medical Image Processing and Analysis, pp. 129-174, edited by J.M. Fitzpatrick and M. Sonka, SPIE Press, May 2000, which is hereby incorporated by reference in its entirety.

Additionally, analysis means 14 for analyzing the segmented data for characteristics of the disease is provided in unit 12, the analysis resulting in a set of analysis data 25, i.e. candidates for the disease. Also, evaluation means 15 for evaluating the set of analysis data 25 with respect to the disease. Evaluation of the analysis data 25 may be performed by any kind of expert algorithm available to the skilled person, such Bayesian network, artificial neural network (ANN), fuzzy logical based network, etc.

Applying the principle of the invention, at least one of the segmentation means 13, the analysis means 14 and the evaluation means 15, is arranged to receive as an input to their processing a position dependent probability P_r for the disease as indicated within the unit 12. Final and/or preliminary results are subsequently transferred via dedicated connection means 16 (short range or long range, possibly via internet) or by wireless transmission to a general user interface (UI) 17 where a radiologist or similarly trained personnel can benefit from the improved CAD process provided by the present invention.

For a range of possible applications an individualized general patient model, or aspects of it, can be shown to the medically trained user, either for verification or for facilitation of reporting (e.g. automated description or picture generation for lesion location definition). Potentially, the attached meta-information, such as locally variable lesion probabilities, can also be shown to the clinician for diagnosis support.

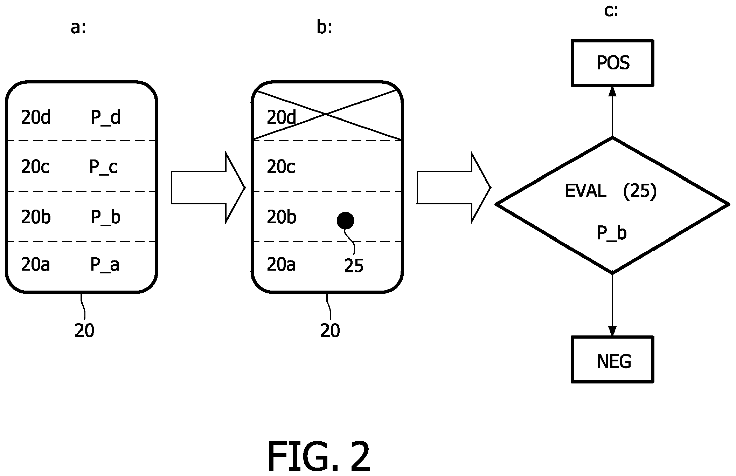

Figure 2 is a schematic flow chart of the method steps according to an embodiment of the present invention for performing computer-aided detection (CAD) of a disease (including also an anomalous structure that is not malignant) on a medical image data set 20, the data set 20 being obtained from an imaging modality IM as described above. After segmenting the medical image data set 20 using an anatomical model relevant for the patient under examination, the medical image data set 20 can be divided into regions where each region have an associated position dependent probability P_r for the disease.

For merely illustrative reasons, the number of regions in Figure 2 is four; 20a, 20b, 20c, and 20d, with associated probabilities P a, P_b, P_c, and P_d, respectively. Of course the number of regions can be adapted to the number of available probabilities; the higher the number of probabilities, the more finely divided the data set 20. Assuming that the probability P_d in region 20d is below a predetermined limit, e.g. 1%, it is possible to discard this region 20d for segmentation and/or any further analysis and evaluation. This is shown symbolically in Figure 2, part b, where region 20d is crossed over.

During analysis of the segmented data for characteristics of the disease, the region 20d is not studied resulting in a simplification of CAD process. The analysis may also be adapted to the region dependent probabilities P_r. Thus, the internal parameter of the computer-aided detection can in general be made dependent, either directly or indirectly, on these probabilities. Also, the mesh or grid for analysis can be coarser and finer depending on the probabilities. The analysis results in a set of analysis data 25, i.e. candidates from the disease. In Figure 2 this is symbolically indicated as round circle, e.g. a tumour, but the exterior shape of the analysis data 25 could of course be of any kind.

In the last step, shown in part c of Figure 2, there is performed an evaluation of the set of analysis data 25 with respect to the disease. In generally, the evaluation can be either positive POS or negative NEG with respect to the disease for the given analysis data 25. According to the present invention, the probability P_b for the disease in the region 20b where the candidate 25 was found is actively used as an input in the evaluation process. Thus, the probability P_b can for example be used as input in one or more nodes in a Bayesian network used for evaluation of the disease candidate 25 with respect to the disease.

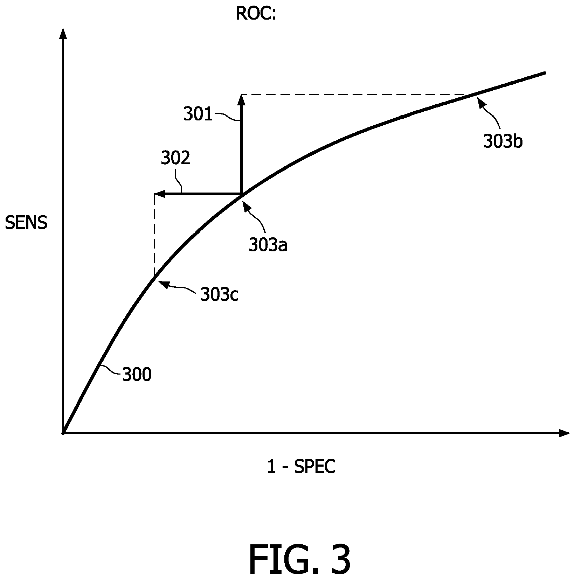

Figure 3 is a receiver operating characteristics (ROC) graph for a binary classifier system with the sensitivity SENS on the vertical scale and one minus the specificity 1-SPEC on the horizontal scale, the present invention being particularly suited for modifying receiver operating characteristics 300 (ROC) of a computer aided detection (CAD) method. Thus, the position dependent probability P_r may be applied to change a current operation point 303a of the receiver operation characteristics 300 (ROC) of the computer-aided detection (CAD) algorithm. Accordingly, the specificity SPEC of the performed analysis can be increased in dependency of the position dependent probability P_r by moving along arrow 302 resulting in a new operation point 303c. The specificity can be increased when for example the probability P_r for finding the disease in a certain region is high.

Alternatively, the sensitivity SENS of the performed analysis can be increased in dependency of the position dependent probability by moving along arrow 301 resulting in yet another operation point 303b. Thus, for low P_r regions the sensitivity can be increased. Notice that this may be practically implemented by changing internal parameters of CAD algorithm; it is generally not possible to shift the entire curve 300 for a certain CAD algorithm. Thus, the present invention can provide a direction for a change in the operation point 303a on the ROC curve 300, the invention does not change the ROC curve 300 itself.

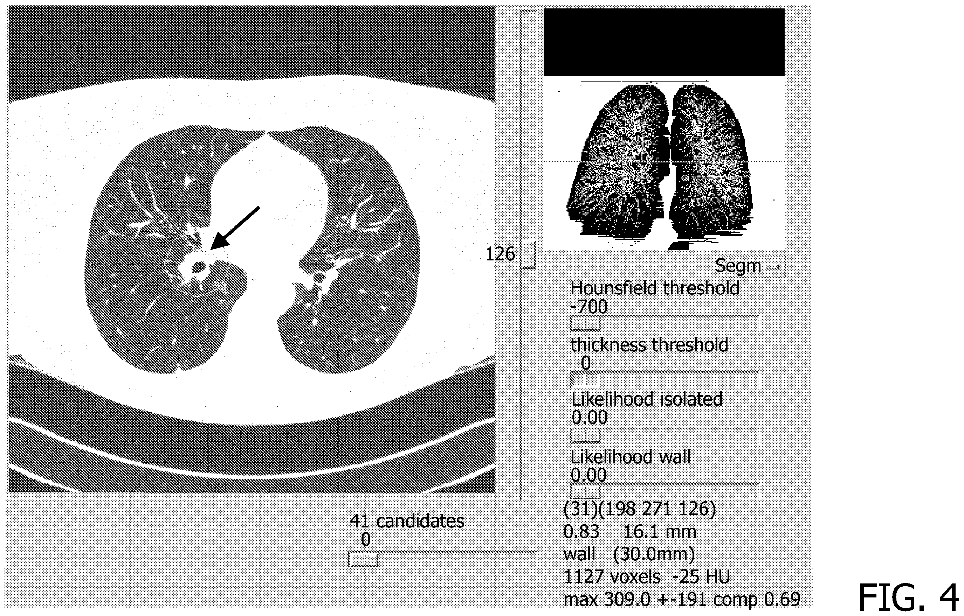

Figure 4 is a cross-sectional CT image of a patient illustrating a false positive (FP) nodule candidate (as indicated by the solid arrow). Purely geometrically, this false positive candidate (a hilus vessel branching out of the mediastinum) looks like a mass, also the size is realistic. This is probably a category of FPs which could only be excluded by anatomical knowledge, e.g. in the form of region dependent probability P_r, not by pure shape features. Using anatomical knowledge of typical vessel positions and sizes this FP could have been detected as such and be suppressed using the principles of the present invention.

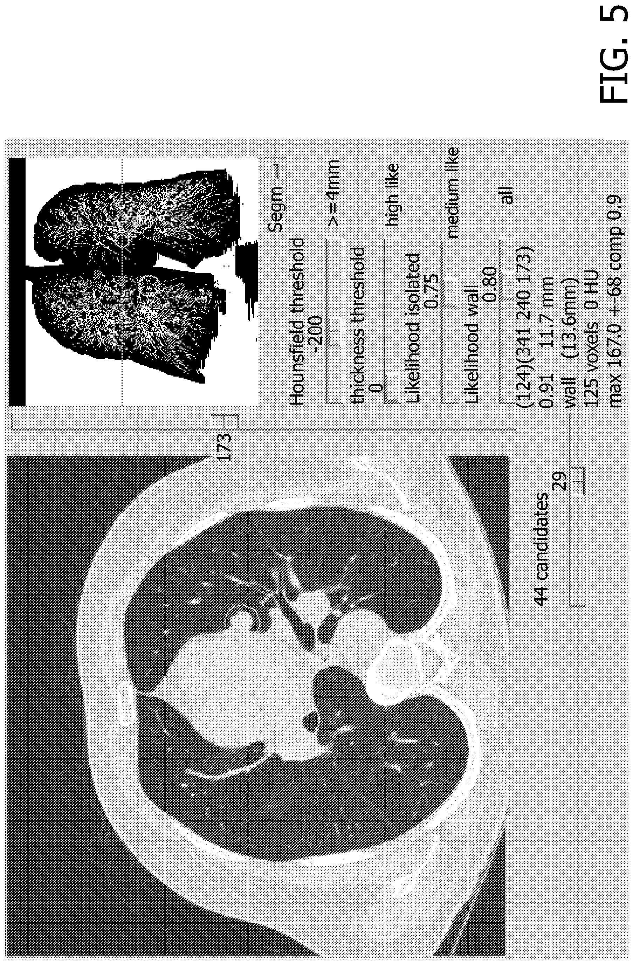

Figure 5 is a cross-sectional CT image of a patient illustrating a true nodule (true positive, TP) as indicated by the solid arrow i.e. a counter-example of a true nodule/ lesion at the mediastinum of similar geometric appearance as compared to Fig. 4. The decision of a true nodule will be more probable using a variant of the present invention with probabilities of non-diseaseus structures because the anatomical model does not predict a likelihood of a vessel being in that region.

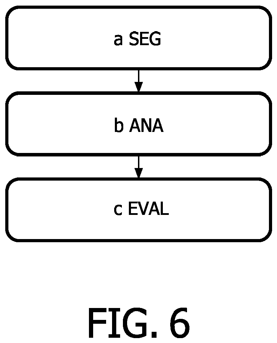

Figure 6 is a schematic flow chart of a method according for performing computer-aided detection (CAD) of a disease on a medical image data set 20 obtained from an imaging modality IM, cf. Figure 1, the method comprising the steps of:
a) segmenting the medical image data set 20 using an anatomical model,
b) analyzing the segmented data for characteristics of the disease resulting in a set of analysis data 25, and
c) evaluating the set of analysis data 25 with respect to the disease, wherein at least one of the above steps a), b) and c) comprises as an input a position dependent probability P_r for the disease.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for analyzing a medical image data set (20), the method comprising the steps of:
a) segmenting the medical image data set (20) using an anatomical model,
b) analyzing the segmented data for characteristics of a disease resulting in a set of analysis data (25), and
c) evaluating the set of analysis data (25) with respect to the disease,
**characterized in that** at least one of the above steps a), b) and c) comprises as an input a value of a position dependent probability (P_r) for the disease.

2. The method according to claim 1, wherein the step a) of segmenting the medical image data set using an anatomical model comprises as an input a value of a position dependent probability (P_r) for the disease.

3. The method according to claim 2, wherein one or more regions (20d) of the medical image data set (20) is not segmented due to the value of a position dependent probability (P_d) for the disease in the one or more regions being below a predetermined threshold value.

4. The method according to claim 1, wherein the step b) of analyzing the segmented data for characteristics of the disease resulting in a set of analysis data comprises as an input a value of a position dependent probability (P_r) for the disease.

5. The method according to claim 4, wherein the value of a position dependent probability (P_r) is applied to change the operation point (303a) of receiver operation characteristics (ROC) of computer-aided detection (CAD).

6. The method according to claim 4, wherein the specificity of the performed analysis is increased in dependency of the value of a position dependent probability (P_r) for the disease.

7. The method according to claim 4, wherein sensitivity of the performed analysis is increased in dependency of the value of a position dependent probability (P_r) for the disease.

8. The method according to claim 1, wherein the step c) of evaluating the set of analysis data with respect to the disease comprises as an input a value of a position dependent probability (P_r) for the disease.

9. The method according to claim 1, wherein the disease is a tumour and the corresponding value of a position dependent probability (P_r) is the value of a probability for having a tumour at that position (P_r_tum).

10. The method according to claim 9, wherein the value of a position dependent probability for having a tumour (P_r_tum) is combined with a probability that the tumour is malignant (P_r_tum_M) and/or benign (P_r_tum_B).

11. The method according to claim 1, wherein the value of a position dependent probability (P_r) for the disease is obtained from a reference database of position dependent probabilities.

12. The method according to claim 1, where the value of a position dependent probability (P_r) for the disease is combined with a probability (P_CAD) for finding the disease dependent on the CAD method being applied.

13. The method according to claim 1, where the value of a position dependent probability (P_r) for the disease is combined with a probability (P_IM) for finding the disease dependent on the imaging modality used to obtain the medical image data set.

14. A computer system arranged for analyzing a medical image data set (20), the system comprising:
segmentation means (13) for segmenting the medical image data set (20) using an anatomical model,
analysis means (14) for analyzing the segmented data for characteristics of a disease resulting in a set of analysis data (25), and
evaluation means (15) for evaluating the set of analysis data (25) with respect to the disease,
**characterized in that** at least one of the segmentation means (13), the analysis means (14) and the evaluation means (15), is arranged to receive as an input a value of a position dependent probability (P_r) for the disease.

15. A computer program product being adapted to enable a computer system comprising at least one computer having data storage means in connection therewith to control a computer system according to claim 1.

## Patentansprüche

1. Verfahren zum Analysieren eines medizinischen Bilddatensatzes (20), wobei das Verfahren die folgenden Schritte umfasst:
a) Segmentieren des medizinischen Bilddatensatzes (20) unter Verwendung eines anatomischen Modells,
b) Analysieren der segmentierten Daten auf Merkmale einer Krankheit, wodurch sich ein Satz von Analysedaten (25) ergibt, und
c) Evaluieren des Satzes von Analysedaten (25) in Bezug auf die Krankheit,
**dadurch gekennzeichnet, dass** mindestens einer der obigen Schritte a), b) und c) als eine Eingabe einen Wert einer positionsabhängigen Wahrscheinlichkeit (P_r) für die Krankheit umfasst.

2. Verfahren nach Anspruch 1, wobei der Schritt a) des Segmentierens des medizinischen Bilddatensatzes unter Verwendung eines anatomischen Modells als eine Eingabe einen Wert einer positionsabhängigen Wahrscheinlichkeit (P_r) für die Krankheit umfasst.

3. Verfahren nach Anspruch 2, wobei eine oder mehrere Regionen (20d) des medizinischen Bilddatensatzes (20) nicht segmentiert werden, weil der Wert einer positionsabhängigen Wahrscheinlichkeit (P_d) für die Krankheit in der einen oder mehreren Regionen unter einem vorgegebenen Schwellenwert liegt.

4. Verfahren nach Anspruch 1, wobei der Schritt b) des Analysierens der segmentierten Daten auf Merkmale der Krankheit, wodurch sich ein Satz von Analysedaten ergibt, als eine Eingabe einen Wert einer positionsabhängigen Wahrscheinlichkeit (P_r) für die Krankheit umfasst.

5. Verfahren nach Anspruch 4, wobei der Wert einer positionsabhängigen Wahrscheinlichkeit (P_r) angewendet wird, um den Arbeitspunkt (303a) der Grenzwertoptimierungskurve (Receiver operation characteristics, ROC) von computergestützter Detektion (CAD) zu ändern.

6. Verfahren nach Anspruch 4, wobei die Spezifität der durchgeführten Analyse in Abhängigkeit von dem Wert einer positionsabhängigen Wahrscheinlichkeit (P_r) für die Krankheit erhöht wird.

7. Verfahren nach Anspruch 4, wobei die Empfindlichkeit der durchgeführten Analyse in Abhängigkeit von dem Wert einer positionsabhängigen Wahrscheinlichkeit (P_r) für die Krankheit erhöht wird.

8. Verfahren nach Anspruch 1, wobei der Schritt c) des Evaluierens des Satzes von Analysedaten in Bezug auf die Krankheit als einen Eingabe einen Wert einer positionsabhängigen Wahrscheinlichkeit (P_r) für die Krankheit umfasst.

9. Verfahren nach Anspruch 1, wobei die Krankheit ein Tumor ist und der entsprechende Wert einer positionsabhängigen Wahrscheinlichkeit (P_r) der Wert einer Wahrscheinlichkeit dafür ist, einen Tumor an dieser Position (P_r_tum) zu haben.

10. Verfahren nach Anspruch 9, wobei der Wert einer positionsabhängigen Wahrscheinlichkeit, einen Tumor zu haben (P r tum), mit einer Wahrscheinlichkeit kombiniert wird, dass es sich um einen malignen Tumor (P_r_tum_M) und/oder einen benignen Tumor (P r tum B) handelt.

11. Verfahren nach Anspruch 1, wobei der Wert einer positionsabhängigen Wahrscheinlichkeit (P_r) für die Krankheit aus einer Referenzdatenbank von positionsabhängigen Wahrscheinlichkeiten erlangt wird.

12. Verfahren nach Anspruch 1, wobei der Wert einer positionsabhängigen Wahrscheinlichkeit (P_r) für die Krankheit mit einer Wahrscheinlichkeit (P_CAD) für das Finden der Krankheit abhängig von dem angewendeten CAD-Verfahren kombiniert wird.

13. Verfahren nach Anspruch 1, wobei der Wert einer positionsabhängigen Wahrscheinlichkeit (P_r) für die Krankheit mit einer Wahrscheinlichkeit (P_IM) für das Finden der Krankheit abhängig von der zum Erlangen des medizinischen Bilddatensatzes verwendeten Bildgebungsmodalität kombiniert wird.

14. Computersystem, das vorgesehen ist, um einen medizinischen Bilddatensatz (20) zu analysieren, wobei das System Folgendes umfasst:
Segmentierungsmittel (13) zum Segmentieren des medizinischen Bilddatensatzes (20) unter Verwendung eines anatomischen Modells,
Analysemittel (14) zum Analysieren der segmentierten Daten auf Merkmale einer Krankheit, wodurch sich ein Satz von Analysedaten (25) ergibt, und
Evaluierungsmittel (15) zum Evaluieren des Satzes von Analysedaten (25) in Bezug auf die Krankheit,
**dadurch gekennzeichnet, dass** mindestens entweder das Segmentierungsmittel (13), das Analysemittel (14) oder das Evaluierungsmittel (15) vorgesehen ist, um als eine Eingabe einen Wert einer positionsabhängigen Wahrscheinlichkeit (P_r) für die Krankheit zu empfangen.

15. Computerprogrammprodukt, das dafür ausgelegt ist, ein Computersystem umfassend mindestens einen Computer mit hiermit verbundenen Datenspeichermitteln zu befähigen, ein Computersystem nach Anspruch 1 zu steuern.

## Revendications

1. Procédé d'analyse d'un ensemble de données d'images médicales (20), le procédé comprenant les étapes de :
a) segmentation de l'ensemble de données d'images médicales (20) à l'aide d'un modèle anatomique,
b) analyse des données segmentées à la recherche de caractéristiques d'une maladie aboutissant à un ensemble de données d'analyse (25), et
c) évaluation de l'ensemble de données d'analyse (25) par rapport à la maladie,
**caractérisé en ce qu'**au moins l'une des étapes a), b) et c) ci-dessus comprend en entrée une valeur d'une probabilité selon la position (P_r) pour la maladie.

2. Procédé selon la revendication 1, dans lequel l'étape a) de segmentation de l'ensemble de données d'images médicales à l'aide d'un modèle anatomique comprend en entrée une valeur d'une probabilité selon la position (P_r) pour la maladie.

3. Procédé selon la revendication 2, dans lequel une ou plusieurs régions (20d) de l'ensemble de données d'images médicales (20) ne sont pas segmentées en raison de la valeur d'une probabilité selon la position (P_d) pour la maladie dans les une ou plusieurs régions inférieure à une valeur seuil prédéterminée.

4. Procédé selon la revendication 1, dans lequel l'étape b) d'analyse des données segmentées à la recherche de caractéristiques de la maladie aboutissant à un ensemble de données d'analyse comprend en entrée une valeur d'une probabilité selon la position (P_r) pour la maladie.

5. Procédé selon la revendication 4, dans lequel la valeur d'une probabilité selon la position (P_r) est appliquée pour changer le point d'efficacité (303a) de fonctions d'efficacité du récepteur (ROC) d'une détection assistée par ordinateur (CAD).

6. Procédé selon la revendication 4, dans lequel la spécificité de l'analyse effectuée est augmentée en fonction de la valeur d'une probabilité selon la position (P_r) pour la maladie.

7. Procédé selon la revendication 4, dans lequel la sensibilité de l'analyse effectuée est augmentée en fonction de la valeur d'une probabilité selon la position (P_r) pour la maladie.

8. Procédé selon la revendication 1, dans lequel l'étape c) d'évaluation de l'ensemble de données d'analyse par rapport à la maladie comprend en entrée une valeur d'une probabilité selon la position (P_r) pour la maladie.

9. Procédé selon la revendication 1, dans lequel la maladie est une tumeur et la valeur correspondante d'une probabilité selon la position (P_r) est la valeur d'une probabilité d'avoir une tumeur à cette position (P_r_tum).

10. Procédé selon la revendication 9, dans lequel la valeur d'une probabilité selon la position d'avoir une tumeur (P_r_tum) est combinée à une probabilité que la tumeur est maligne (P_r_tum_M) et/ou bénigne (P_r_tum_B).

11. Procédé selon la revendication 1, dans lequel la valeur d'une probabilité selon la position (P_r) pour la maladie est obtenue à partir d'une base de données de référence de probabilités selon la position.

12. Procédé selon la revendication 1, dans lequel la valeur d'une probabilité selon la position (P_r) pour la maladie est combinée à une probabilité (P_CAD) de trouver la maladie selon le procédé CAD appliqué.

13. Procédé selon la revendication 1, où la valeur d'une probabilité selon la position (P_r) pour la maladie est combinée à une probabilité (P_IM) de trouver la maladie selon la modalité d'imagerie utilisée pour obtenir l'ensemble de données d'images médicales.

14. Système d'ordinateur agencé pour analyser un ensemble de données d'images médicales (20), le système comprenant :
un moyen de segmentation (13) pour segmenter l'ensemble de données d'images médicales (20) à l'aide d'un modèle anatomique,
un moyen d'analyse (14) pour analyser les données segmentées à la recherche de caractéristiques d'une maladie aboutissant à un ensemble de données d'analyse (25), et
un moyen d'évaluation (15) pour évaluer l'ensemble de données d'analyse (25) par rapport à la maladie,
**caractérisé en ce qu'**au moins l'un du moyen de segmentation (13), du moyen d'analyse (14) et du moyen d'évaluation (15), est agencé pour recevoir en entrée une valeur d'une probabilité selon la position (P_r) pour la maladie.

15. Produit programme d'ordinateur adapté pour permettre un système d'ordinateur comprenant au moins un ordinateur ayant un moyen de stockage de données en lien avec celui-ci de commander un système d'ordinateur selon la revendication 1.
